# EUROPEAN PATENT SPECIFICATION

(11) **EP 4 135 119 B1**
(45) Date of publication and mention of the grant of the patent: **18.10.2023**
(21) Application number: 22188107.1
(22) Date of filing: 01.08.2022
(51) Int. Cl.: H01M 50/557, H01M 50/503, H01M 50/509, H01M 50/516

(54) **BUS BAR**
SAMMELSCHIENE
BARRE OMNIBUS

(30) Priority: 06.08.2021 JP 2021129501
(43) Date of publication of application: 15.02.2023
(73) Proprietor: Yazaki Corporation, Tokyo (JP)
(72) Inventor: Chaen, Takahiro, Kakegawa-shi, Shizuoka (JP); Yamaguchi, Yasuhiro, Kakegawa-shi, Shizuoka (JP)
(74) Representative: Grünecker Patent- und Rechtsanwälte PartG mbB

(56) References cited:
- WO-A1-2016/178726
- JP-A- 2017 123 318
- JP-A- 2017 168 267
- JP-A- 2017 168 340
- US-A1- 2021 203 040

## Description

### TECHNICAL FIELD

The present invention relates to a bus bar.

### BACKGROUND

JP 2001-286028 A proposes a bus bar in which a wiring pathway is formed of a single member made from a conductive material. The single member is formed in a shape along the wiring pathway by performing press working on a single flat plate shaped base material. Alternatively, the single member is formed in a shape along the wiring pathway by performing a forming process on a single linear base material.

### SUMMARY

In a bus bar, plate processing is performed as surface treatment in order to improve the electrical connection reliability of connection portions for electrical input-output. However, in a case where a wiring pathway is formed of a single member like the bus bar described in JP 2001-286028 A, it is necessary to perform plate processing on the entirety of the bus bar, thereby increasing the used amount of a plating material and thus increasing the cost. Although plate processing may be performed in a state where the portion other than the connection portions of the bus bar is masked in order to decrease the used amount of a plating material, it is still necessary to perform masking work, thereby increasing the cost.

Further prior art is known from document JP 2017123 318 A which discloses a bus bar according to the preamble part of claim 1.

An object of the present invention is to provide a lower cost bus bar.

A bus bar in accordance with the present invention includes the features of claim 1.

### BRIEF DESCRIPTION OF THE DRAWINGS

Fig. 1 is a block diagram of a bus bar according to an embodiment applied between different battery stacks.
Fig. 2 is a plan view of an example of the bus bar according to the embodiment.
Fig. 3 is a plan view of another example of the bus bar according to the embodiment.
Fig. 4 is a perspective view of yet another example of the bus bar according to the embodiment.
Fig. 5 is a perspective view of still yet another example of the bus bar according to the embodiment.
Fig. 6 is a perspective view of still yet another example of the bus bar according to the embodiment.
Fig. 7 is an enlarged perspective view of the main part of still yet another example of the bus bar according to the embodiment.

### DETAILED DESCRIPTION

Various embodiments will be described hereinafter with reference to the accompanying drawings.

A detailed description will be hereinbelow provided for a bus bar 1 according to an embodiment by referring to the drawings. Noted that the proportions of the dimensions of the drawings are exaggerated for illustration purposes and therefore the proportions may be different from actual ones.

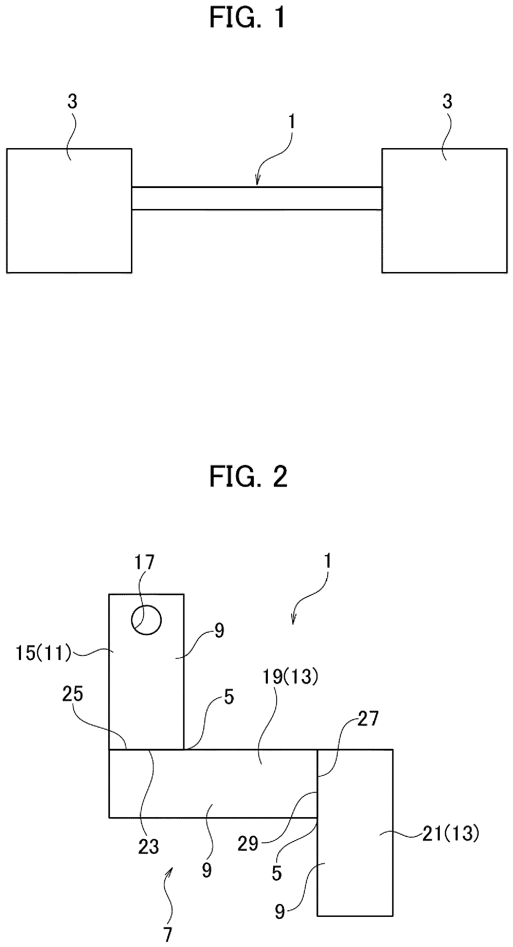

As illustrated in Figs. 1 to 3, the bus bar 1 according to the embodiment is made from a conductive material and electrically connects between different battery stacks 3 mounted on a vehicle, for example. The bus bar 1 includes a wiring pathway 7 having bent portions 5 to avoid interference with non-illustrated peripheral members arranged between the battery stacks 3. The wiring pathway 7 includes plate shaped members 9 consecutively arranged. The members 9 include at least one connection member 11 and at least one conductive member 13.

The connection member 11 of the bus bar 1 illustrated in Fig. 2 includes a first connection member 15 arranged at one end of the wiring pathway 7. A connection portion 17 electrically connected to one of the battery stacks 3 is provided in the first connection member 15. The connection portion 17 is a fastening portion to which a non-illustrated fastening member such as a bolt is fastened, for example.

The first connection member 15 is made from copper which has excellent electrical connection to one of the battery stacks 3 and is suitable for fastening of the fastening member, for example. The first connection member 15 may be made from copper alloy composed mainly of copper. The first connection member 15 may be made from 6000 series aluminum alloy composed mainly of aluminum which has excellent electrical connection to one of the battery stacks 3 and is suitable for fastening of the fastening member, for example. In this way, the material for the connection member 11 may be any materials as long as it has excellent conductivity and excellent stiffness.

The first connection member 15 is formed in a quadrangular plate shape by press working or a forming process. The first connection member 15 is readily processable due to its simple quadrangular shape, thereby reducing the manufacturing cost. The conductive members 13 are consecutively arranged in the first connection member 15.

The conductive member 13 of the bus bar 1 illustrated in Fig. 2 includes a first conductive member 19 arranged adjacent to the first connection member 15, and a second conductive member 21 arranged adjacent to the first conductive member 19 and at the other end of the wiring pathway 7. The first conductive member 19 and the second conductive member 21 are made from copper as with the first connection member 15. The first conductive member 19 and the second conductive member 21 may be made from copper alloy composed mainly of copper. When the first connection member 15 is made from aluminum alloy composed mainly of aluminum, for example, the first conductive member 19 and the second conductive member 21 may be made from the same aluminum alloy. The first conductive member 19 electrically connects the first connection member 15 to the second conductive member 21. The second conductive member 21 is electrically connected to the other of the battery stacks 3 via a connector or the like, for example.

The first conductive member 19 and the second conductive member 21 are respectively formed in a quadrangular plate shape by press working or a forming process. The first conductive member 19 and the second conductive member 21 are readily processable due to their simple quadrangular shape, thereby reducing the manufacturing cost. In the embodiment, the first conductive member 19 and the second conductive member 21 have the same plate thickness, the same plate width, and the same plate length. Thus, the first conductive member 19 and the second conductive member 21 can be formed by the same processing method, thereby reducing the manufacturing cost even more. The first conductive member 19 and the second conductive member 21 may be made from different materials and have different plate thicknesses, different plate widths, and different plate lengths.

In the embodiment, the conductive members 13 and the first connection member 15 have the same plate thickness, the same plate width, and the same plate length. Thus, the conductive members 13 and the first connection member 15 can be formed by the same processing method, thereby reducing the manufacturing cost even more. The conductive members 13 and the first connection member 15 may have different plate thicknesses, different plate widths, and different plate lengths. For example, the plate width of the respective conductive members 13 may be larger than the plate width of the first connection member 15 in order to improve heat dissipation of the conductive members 13 with the increased surface area.

The conductive members 13 may be formed to have the bent portions 5 in the wiring pathway 7. When the conductive members 13 are provided with the bent portions 5, the conductive members 13 may be made from 1000 series aluminum alloy composed mainly of aluminum which is softer than and superior in formability to the first connection member 15, for example. The plate thickness of the respective conductive members 13 may be less than the plate thickness of the first connection member 15 in order to reduce the stiffness of the conductive members 13 with increased formability. In this way, the increased formability of the conductive members 13 allows processing for forming the bent portions 5 in the conductive members 13 to be easily carried out, thereby reducing the manufacturing cost.

The members 9 including the connection member 11 and the conductive members 13 described above are arranged along the wiring pathway 7 and the portions in contact with each other are connected by laser joining. An example of the connection of the members 9 in the bus bar 1 illustrated in Fig. 2 is described below. First, a connection surface 25 which is one end surface of the first conductive member 19 in the width direction thereof is arranged to be in contact with a connection surface 23 which is one end surface of the first connection member 15 in the length direction thereof. Next, the portions where the connection surface 23 of the first connection member 15 and the connection surface 25 of the first conductive member 19 are in contact with each other are connected to each other by laser joining. The connection of the first connection member 15 and the first conductive member 19 forms a bent portion 5 in the wiring pathway 7.

Next, a connection surface 29 which is one end surface of the second conductive member 21 in the width direction thereof is arranged to be in contact with a connection surface 27 which is one end surface of the first conductive member 19 in the length direction thereof. Then, the portions where the connection surface 27 of the first conductive member 19 and the connection surface 29 of the second conductive member 21 are in contact with each other are connected to each other by laser joining. The connection of the first conductive member 19 and the second conductive member 21 forms a bent portion 5 in the wiring pathway 7.

In this way, the wiring pathway 7 having the bent portions 5 can be formed by consecutively connecting the members 9 to each other by laser joining. Thus, there is no need to form a single member in a shape along the wiring pathway 7 by press working or a forming process and it is possible to easily correspond with wiring pathways 7 having various shapes.

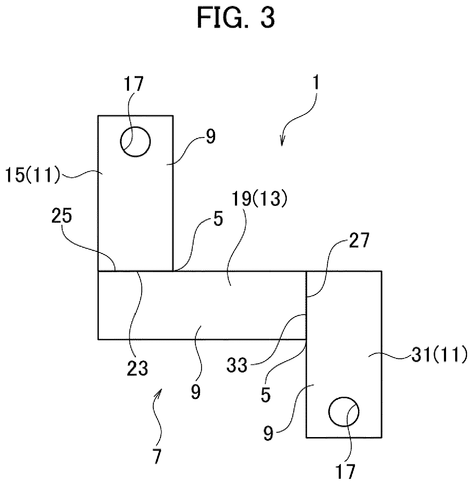

In the bus bar 1 illustrated in Fig. 3, the member 9 arranged at the other end of the wiring pathway 7 is the second connection member 31 as the connection member 11. A connection portion 17 electrically connected to the other of the battery stacks 3 is provided in the second connection member 31. The connection portion 17 is a fastening portion to which a non-illustrated fastening member such as a bolt is fastened, for example.

As with the first connection member 15, the second connection member 31 is made from copper which has excellent electrical connection to the other of the battery stacks 3 and is suitable for fastening of the fastening member, for example. The second connection member 31 may be made from copper alloy composed mainly of copper. The second connection member 31 may be made from 6000 series aluminum alloy composed mainly of aluminum which has excellent electrical connection to the other of the battery stacks 3 and is suitable for fastening of the fastening member, for example.

The second connection member 31 is formed in a quadrangular plate shape by press working or a forming process. The second connection member 31 is readily processable due to its simple quadrangular shape, thereby reducing the manufacturing cost. In the embodiment, the second connection member 31 has the same plate thickness, the same plate width, and the same plate length as the first connection member 15 and the first conductive member 19. Thus, the second connection member 31 can be formed by the same processing method as the first connection member 15 and the first conductive member 19, thereby reducing the manufacturing cost even more. The second connection member 31 may be made from a different material and have a different plate thickness, a different plate width, and a different plate length from the first connection member 15 and the first conductive member 19.

An example of the connection of the members 9 in the bus bar 1 illustrated in Fig. 3 is described below. First, a connection surface 25 which is one end surface of the first conductive member 19 in the width direction thereof is arranged to be in contact with a connection surface 23 which is one end surface of the first connection member 15 in the length direction thereof. Next, the portions where the connection surface 23 of the first connection member 15 and the connection surface 25 of the first conductive member 19 are in contact with each other are connected to each other by laser joining. The connection of the first connection member 15 and the first conductive member 19 forms the bent portion 5 in the wiring pathway 7.

Next, a connection surface 33 which is one end surface of the second connection member 31 in the width direction thereof is arranged to be in contact with a connection surface 27 which is one end surface of the first conductive member 19 in the length direction thereof. Then, the portions where the connection surface 27 of the first conductive member 19 and the connection surface 33 of the second connection member 31 are in contact with each other are connected to each other by laser joining. The connection of the first conductive member 19 and the second connection member 31 forms the bent portion 5 in the wiring pathway 7.

In this way, the wiring pathway 7 having the bent portions 5 can be formed by consecutively connecting the members 9 to each other by laser joining. Thus, there is no need to form a single member in a shape along the wiring pathway 7 by press working or a forming process and it is possible to easily correspond with wiring pathways 7 having various shapes.

In the bus bar 1 illustrated in Figs. 2 and 3, when the connection member(s) 11 and the conductive member(s) 13 are made from different types of metal such as copper and aluminum, an intermetallic compound may be generated at the connection portions thereof, causing the joint strength to decrease. Thus, when the connection member(s) 11 and the conductive member(s) 13 are made from different types of metal, a clad member including the same types of metal as the connection member(s) 11 and the conductive member(s) 13 may be interposed between the connection member(s) 11 and the conductive member(s) 13.

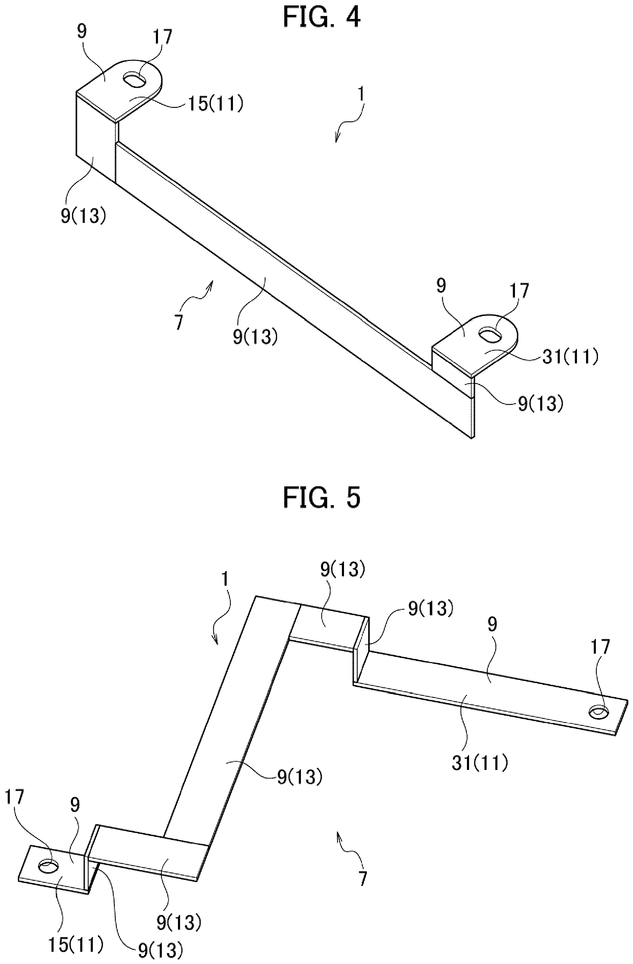

In the bus bar 1 illustrated in Figs. 2 and 3, the members 9 are arranged in the same plane. However, the present invention is not limited to this. For example, as illustrated in Figs. 4 to 6, the members 9 may be arranged three-dimensionally and consecutively connected by laser joining in order to correspond with the three-dimensional wiring pathway 7. In the bus bar 1 illustrated in Figs. 4 to 6, the member 9 arranged at the other end of the wiring pathway 7 is the connection member 11. However, the present invention is not limited to this and the member 9 arranged at the other end of the wiring pathway 7 may be the conductive member 13. The bend angles at the bent portions 5 are not limited to 90 degrees. The bend angles at the bent portions 5 may be less than 90 degrees or more than 90 degrees in accordance with the bend shape of the wiring pathway 7.

Since the bus bar 1 is a member which electrically connects between the battery stacks 3, it is preferable to perform plate processing as surface treatment in order to improve the electrical connection reliability between the bus bar 1 and the battery stacks 3. However, in a case where the bus bar 1 is formed of a single member, it is necessary to perform plate processing on the entirety of the bus bar 1, thereby increasing the used amount of a plating material and thus increasing the cost. Although plate processing may be performed in a state where the portion other than the connection portion(s) 17 of the bus bar 1 is masked in order to decrease the used amount of a plating material, it is still necessary to perform masking work, thereby increasing the cost. Thus, only the connection member(s) 11 is plated in the bus bar 1 according to the embodiment.

In the bus bar 1 illustrated in Fig. 2, plate processing as surface treatment is performed on the first connection member 15 after the first connection member 15 is formed by press working or a forming process, for example. In contrast, plate processing as surface treatment is not performed on the first conductive member 19 and the second conductive member 21 after the first conductive member 19 and the second conductive member 21 are formed by press working or a forming process, for example. Thus, in a state where the first connection member 15, the first conductive member 19, and the second conductive member 21 are connected to each other, plate processing as surface treatment has been performed on only the first connection member 15. Accordingly, it is possible to achieve a state where plate processing has been performed on the first connection member 15 including the connection portion 17 without requiring masking work, thereby decreasing the cost of the bus bar 1. Additionally, it is possible to decrease the used amount of a plating material and thus decrease the cost.

In the bus bar 1 illustrated in Fig. 3, plate processing as surface treatment is performed on the first connection member 15 and the second connection member 31 after the first connection member 15 and the second connection member 31 are formed by press working or a forming process, for example. In contrast, plate processing as surface treatment is not performed on the first conductive member 19 after the first conductive member 19 is formed by press working or a forming process, for example. Thus, in a state where the first connection member 15, the first conductive member 19, and the second connection member 31 are connected to each other, plate processing as surface treatment has been performed on only the first connection member 15 and the second connection member 31. Accordingly, it is possible to achieve a state where plate processing has been performed on the first connection member 15 and the second connection member 31 including the connection portions 17 without requiring masking work, thereby decreasing the cost of the bus bar 1. Additionally, it is possible to decrease the used amount of a plating material and thus decrease the cost.

In this way, the electrical connection reliability between the connection member(s) 11 and the battery stack(s) 3 can be improved by performing plate processing on the connection member(s) 11. Performing plate processing on the connection member(s) 11 can be also applied to a case such as the bus bar 1 illustrated in Figs. 4 to 6 where the members 9 are arranged three-dimensionally. When the connection member(s) 11 which has been plated and the conductive member(s) 13 which has not been plated are connected to each other in the three-dimensional bus bar 1, the connection surfaces arranged in the same plane may be brought into contact with each other and then connected to each other by laser joining.

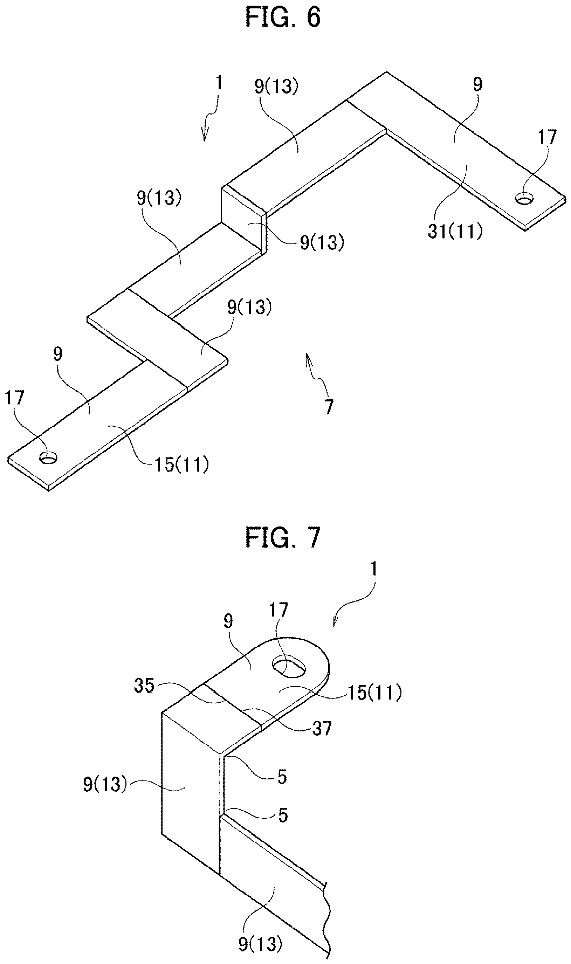

For example, in the bus bar 1 illustrated in Fig. 4, the conductive member 13 is bent at the connection portions between the first connection member 15 and the conductive member 13 such that a part of the conductive member 13 is located in the same plane as the first connection member 15 as illustrated in Fig. 7. Then, a connection surface 35 which is an end surface of the first connection member 15 and a connection surface 37 which is an end surface of the conductive member 13 located in the same plane are brought into contact with each other, and the portions at which the connection surfaces 35, 37 are in contact with each other are connected to each other by laser joining.

In the bus bar 1 illustrated in Fig. 4, when a connection surface of the first connection member 15 and a connection surface of the conductive member 13 are connected to each other, the position of the conductive member 13 is hard to see and the position for the laser irradiation is hard to identify if a laser is irradiated from the first connection member 15 side. When the connection surfaces of the first connection member 15 and the conductive member 13 are connected to each other as illustrated in Fig. 4, the welding quality may be degraded if a laser is irradiated from the first connection member 15 side since the conductive member 13 side is also melted by the welding. In contrast, when the connection surfaces 35, 37 located in the same plane are connected to each other as illustrated in Fig. 7, the connection portions are easy to see, improving workability. Additionally, since direct welding can be performed along the connection border of the connection surfaces 35, 37 without melting the opposite surface, the welding quality can be improved.

The bus bar 1 described above includes the members 9 which are made from a conductive material and consecutively arranged to form a plate shape defining the wiring pathway 7. The members 9 adjacent to each other are connected to each other by laser joining. The members 9 include the connection member 11 located at one end of the wiring pathway 7 and having the connection portion 17 for electrical input-output, and the conductive member 13 connected to the connection member 11 in a state where the connection surfaces 23, 25 located in the same plane are in contact with each other. In the members 9, only the connection member 11 is plated.

Thus, unlike a case where the wiring pathway 7 is formed of a single member, it is possible to achieve a state where plate processing has been performed on the connection member 11 including the connection portion 17 without requiring masking work, thereby decreasing the cost. Additionally, it is possible to decrease the used amount of a plating material and thus decrease the cost. The connection member 11 and the conductive member 13 are connected to each other in a state where the connection surfaces 23, 25 located in the same plane are in contact with each other. Thus, the connection portions are easy to see, improving workability. Additionally, since direct welding can be performed along the connection border of the connection surfaces 23, 25, the welding quality can be improved. Accordingly, it is possible to provide the bus bar 1 of a lower cost.

The members 9 include the connection member 11 located at the other end of the wiring pathway 7 and having the connection portion 17 for electrical input-output. The connection member 11 is connected to the conductive member 13 in a state where the connection surfaces 27, 33 located in the same plane are in contact with each other. In the members 9, only the connection members 11 are plated.

Thus, it is possible to achieve a state where plate processing has been performed on the connection members 11 including the connection portions 17 without requiring masking work, thereby decreasing the cost. Additionally, it is possible to decrease the used amount of a plating material and thus decrease the cost.

The wiring pathway 7 electrically connects between the different battery stacks 3. Thus, the bus bar 1 plated at low cost can be applied to wiring pathways 7 having various shapes designed to be arranged between the different battery stacks 3.

The bus bar 1 according to the embodiment electrically connects the different battery stacks 3 to each other. However, the present invention is not limited to this. For example, the bus bar 1 may be arranged between any electric components, for example, between a power source and a device and between a device and a device.

In the bus bar 1 according to the embodiment, the wiring pathway 7 includes the bent portion(s) 5. However, the present invention is not limited to this. The wiring pathway 7 may be linear as long as only the connection member(s) 11 in the members 9 is plated.

In the bus bar 1 according to the embodiment, the second connection member 31 is connected to the first conductive member 19. However, the present invention is not limited to this. The second connection member 31 may be connected to the second conductive member 21. Two or more conductive members 13 may be arranged between the first connection member 15 and the second connection member 31.

## Claims

1. A bus bar (1) comprising:
members (9) made from a conductive material and consecutively arranged to form a plate shape defining a wiring pathway (7), wherein
the members (9) adjacent to each other are laser joined members,
the members (9) include:
a first connection member (11) arranged at one end of the wiring pathway (7) and having a first connection portion (17) for electrical input-output; and
a conductive member (13) connected to the first connection member (11) in a state where connection surfaces (23, 25) of the first connection member (11) and the conductive member (13) located in a same plane are in contact with each other, and
in the members (9), only the first connection member (11) is plated,
**characterized in that**
the members (9) include a second connection member (11) arranged at the other end of the wiring pathway (7) and having a second connection portion (17) for electrical input-output,
the second connection member (11) is connected to the conductive member (13) in a state where connection surfaces (27, 33) of the conductive member (13) and the second connection member (11) located in a same plane are in contact with each other, and
in the members (9), only the first connection member (11) and the second connection member (11) are plated.

2. The bus bar (1) according to claim 1, wherein the wiring pathway (7) electrically connects between different battery stacks (3).

## Patentansprüche

1. Sammelschiene (1), die umfasst:
Elemente (9), die aus einem leitenden Material bestehen und aufeinanderfolgend so angeordnet sind, dass sie eine Plattenform bilden, die einen Verdrahtungsweg (7) bestimmt, wobei
die aneinandergrenzenden Elemente (9) laserverschweißte Elemente sind,
und die Elemente (9) einschließen:
ein erstes Verbindungselement (11), das an einem Ende des Verdrahtungsweges (7) angeordnet ist und einen ersten Verbindungsabschnitt (17) für elektrischen Eingang/Ausgang aufweist; sowie
ein leitendes Element (13), das mit dem ersten Verbindungselement (11) in einem Zustand verbunden ist, in dem Verbindungsflächen (23, 25) des ersten Verbindungselementes (11) und des leitenden Elementes (13), die sich in ein und derselben Ebene befinden, in Kontakt miteinander sind, und
von den Elementen (9) nur das erste Verbindungselement (11) plattiert ist,
**dadurch gekennzeichnet, dass**
die Elemente (9) ein zweites Verbindungselement (11) einschließen, das an dem anderen Ende des Verdrahtungsweges (7) angeordnet ist und einen zweiten Verbindungsabschnitt (17) für elektrischen Eingang/Ausgang aufweist,
das zweite Verbindungselement (11) mit dem leitenden Element (13) in einem Zustand verbunden ist, in dem Verbindungsflächen (27, 33) des leitenden Elementes (13) und des zweiten Verbindungselementes (11), die sich in ein und derselben Ebene befinden, in Kontakt miteinander sind, und
von den Elementen (9) nur das erste Verbindungselement (11) und das zweite Verbindungselement (11) plattiert sind.

2. Sammelschiene (1) nach Anspruch 1, wobei der Verdrahtungsweg (7) elektrische Verbindung zwischen verschiedenen Batteriestapeln (3) herstellt.

## Revendications

1. Barre omnibus (1) comprenant :
des éléments (9) constitués à partir d'un matériau conducteur et disposés de manière consécutive pour former une forme de plaque définissant un trajet de câblage (7),
les éléments (9) adjacents l'un à l'autre étant des éléments joints par laser,
les éléments (9) incluant :
un premier élément de raccordement (11) disposé à une extrémité du trajet de câblage (7) et ayant une première portion de raccordement (17) pour l'entrée-la sortie électrique ; et
un élément conducteur (13) raccordé au premier élément de raccordement (11) dans un état où des surfaces de raccordement (23, 25) du premier élément de raccordement (11) et de l'élément conducteur (13) localisées dans un même plan se trouvent en contact les unes avec les autres, et
dans les éléments (9), uniquement le premier élément de raccordement (11) est plaqué,
**caractérisée en ce que**
les éléments (9) incluent un second élément de raccordement (11) disposé à l'autre extrémité du trajet de câblage (7) et ayant une seconde portion de raccordement (17) pour l'entrée-la sortie électrique,
le second élément de raccordement (11) étant raccordé à l'élément conducteur (13) dans un état où des surfaces de raccordement (27, 33) de l'élément conducteur (13) et du second élément de raccordement (11) localisées dans un même plan se trouvent en contact les unes avec les autres, et
dans les éléments (9), uniquement le premier élément de raccordement (11) et le second élément de raccordement (11) sont plaqués.

2. Barre omnibus (1) selon la revendication 1, le trajet de câblage (7) effectuant électriquement un raccordement entre différents empilements de batteries (3).
